# EUROPEAN PATENT APPLICATION

(11) **EP 4 611 150 A1**
(43) Date of publication of application: **03.09.2025**
(21) Application number: 24160357.0
(22) Date of filing: 28.02.2024
(51) Int. Cl.: H01M 50/342

(54) **BATTERY SYSTEM WITH IMPROVED VENTING MECHANISM**

(71) Applicant: Samsung SDI Co., Ltd., Yongin-si, Gyeonggi-do 17084 (KR)
(72) Inventor: Köppel, Andreas, 8144 Haselsdorf-Tobelbad (AT); Haring, Fritz, 8600 Bruck a. d. Mur (AT)
(74) Representative: Gulde & Partner

(57) **Abstract**

The present disclosure refers to a battery system (100), including a battery housing (10); a plurality of battery cells (12) accommodated within the battery housing (10); at least two electronic venting valves (20) arranged at the battery housing (10), the electronic venting valves (20) being adapted to be adjusted between an open position and a closed position via an electronic actuator (21), and a control unit (30) adapted to control the electronic venting valves (20) to open simultaneously in case of a thermal runaway

## Description

### Field of the Disclosure

The present disclosure relates to a battery system which more securely handles a thermal runaway of one or more of its battery cells. Further, the present disclosure relates to a vehicle including the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (for example, a total voltage of the battery pack or battery modules, and/or voltages of individual battery cells), temperature (for example, an average temperature of the battery pack or battery modules, coolant intake temperature, coolant output temperature and/or temperatures of individual battery cells), coolant flow (for example, flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (for example, a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery in the related art is to let a venting gas stream discharged by one or more battery cells expand into the battery housing and escape through a housing venting valve to the outside (for example, to the environment of the battery housing). In the related art mechanical venting valves are used which are opened mechanically by a pressure increase inside the battery housing resulting from the venting gas stream. For example, such mechanical venting valves may include a valve cap that is spring-loaded against a venting opening of the venting valve. When the pressure inside the battery housing rises, a force acting upon the valve cap from the inside may surpass the spring-loading force such that the valve cap is lifted from the venting opening and the venting gas stream may pass through the venting opening.

Generally, the battery housing includes multiple of such mechanical venting valves to provide for a sufficient cross-section to allow for a sufficient flow rate of venting gasses trough the venting openings. However, as the distribution of the pressure inside the battery housing resulting from a thermal runaway may not be homogenous, not all of the mechanical venting valves may open at the same time or the same amount. If one of the mechanical venting valves opens, the pressure may drop to a level too low for the other venting valves to open at all. This prevents a fast discharging of the venting gases and thus leads to a temperature increase, to hot particles collecting in critical areas and an overload of the one venting valve which has opened.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to an aspect of the present disclosure, a battery system includes a battery housing, a plurality of battery cells accommodated within the battery housing, at least two electronic venting valves arranged at the battery housing, the electronic venting valves being adapted to be adjusted between an open position and a closed position via an electronic actuator, and a control unit adapted to control the electronic venting valves to open simultaneously in case of a thermal runaway.

According to an aspect of the present disclosure, the battery system includes a sensor adapted to detect the occurrence of a thermal runaway inside the battery housing and to output a sensor signal in case a thermal runaway occurs, wherein the control unit is adapted to control the electronic venting valves to open simultaneously in response to the sensor signal.

According to an aspect of the present disclosure, the sensor is a pressure sensor adapted to detect a pressure inside the battery housing, wherein the control unit is adapted to control the electronic venting valves to open simultaneously in case the detected pressure exceeds a predetermined value.

According to an aspect of the present disclosure, at least one of the electronic venting valves includes a mechanical backup venting element adapted to open in case a pressure inside the battery housing exceeds a predetermined value.

According to an aspect of the present disclosure, the mechanical backup venting element is disposed in a valve cap of the electronic venting valve.

According to an aspect of the present disclosure, the mechanical backup venting element includes a burst membrane.

According to an aspect of the present disclosure, the electronic actuator includes an electro-magnetic element which, when powered, holds a valve cap of the venting valve in the closed position, wherein the valve cap of the venting valve is preloaded into the opening position such that the valve cap moves into the open position when the electro-magnetic element is unpowered.

According to an aspect of the present disclosure, the electronic actuator includes an electric motor driving a worm gear.

According to an aspect of the present disclosure, the battery system includes a broken wire detection mechanism for detecting whether a cable connection connecting the control unit and one or more of the electronic venting valves is damaged.

Yet another aspect of the present disclosure refers to an electric vehicle including the battery system according to the disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic top view of a battery system according to an embodiment.
Fig. 2 illustrates sectional view of an electronic venting valve of the battery system of Figure 1.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (for example an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, for example on a PCB or another kind of circuit carrier. The conducting elements may include metallization, for example surface metallizations and/or pins, and/or may include conductive polymers or ceramics. Further electrical energy might be transmitted via wireless connections, for example using electromagnetic radiation and/or light.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells. The battery cells are accommodated inside a battery housing of the battery system. The battery cells may be arranged, or stacked, along a stacking direction to form one or more cell stacks. The battery cells may be interconnected via electrical connecting means, for example, busbars, contacting respective electrode terminals of the battery cells to form one or more battery modules/battery packs. The battery cells may be arranged to form one or more battery packs, wherein in a battery pack the battery cells may be electrically interconnected, for example, in a series and/or in parallel as explained above. Multiple of these battery packs may form a battery module. The battery cells may, for example, be prismatic or cylindrical cells.

Each of the battery cells may include a venting exit at a venting side of the battery cell, which may be a terminal side of the battery cells where the electrode terminals of the battery cells are disposed. Each venting exit may be adapted to allow for a venting gas stream to be discharged from the respective battery cell during a thermal runaway of this battery cell. Venting elements may be provided at the venting exits which may open upon a predefined pressure being exceeded.

The battery system further includes at least two electronic venting valves which are arranged at the battery housing so that the venting gas stream may leave the battery housing to the outside (for example, to the environment of the battery housing). The electronic venting valves may be disposed inside a side wall or other wall member of the battery housing, either in the same wall member or in different wall members. The electronic venting valves are each adapted to be moved or adjusted between an open position and a closed position. In the open position, a venting gas stream may pass through the respective electronic venting valve and may thus leave the battery housing. In other words, the electronic venting valves may, in the open position, allow for a venting gas stream exhausted by one or more of the battery cells to pass through the electronic venting valves and leave the battery housing. In the closed position, the respective electronic venting valve blocks the venting gas stream from passing through the respective electronic venting valve and thus from leaving the battery housing. The electronic venting valves may each include a valve base with a venting opening and a valve cap or plug for covering the venting opening in the closed position. In the open position, the valve cap may be distanced from the venting opening thereby uncovering the venting opening so that the venting gas stream may pass through the venting opening to the outside of the battery housing. In the closed position, the valve cap covers the respective venting opening and thus blocks the venting gas stream from leaving the battery housing.

The electronic venting valves are moveable or adjustable between the open position and the closed position via an electronic actuator that is controlled by a control unit. In other words, the electronic venting valves are electronically adjustable or electronically triggered. In that sense, the electronic venting valves are electronically actuated venting valves, not or not merely mechanically actuated venting valves. For example, the control unit may generate an electronic signal and send the electronic signal to the electronic actuator of the electronic venting valves thereby opening the electronic venting valves. The electronic actuator may act on the valve cap to open or close the valve cap and thus adjust the electronic venting valve into the open or the closed position as explained in more detail below. The control unit may be or may form part of a battery management system (BMS) of the battery system.

According to the disclosure, the at least two electronic venting valves, for example all of the electronic venting valves of the battery system, are opened simultaneously. That is, the control unit is adapted to open the at least two electronic venting valves at the same time in reaction to a thermal runaway occurring in one or more of the battery cells. The control unit may, for example, send the same electronic opening signal to the at least two electronic venting valves such that the valves open simultaneously. With a simultaneous opening of the at least two electronic venting valves, for example of all implemented electronic venting valves, the full cross-section of the venting valves can be provided reliably and already in a very early state of a thermal runaway event. In other words, a maximum possible volume flow of the venting gas stream through the electronic venting valves is ensured. Thus, the temperatures inside the battery housing may be kept at a low level and the venting gas stream and its particles, for example gas, dust, dirt and hot particles, may be discharged quickly and reliably. Also, the maximum pressure inside the battery housing may be much lower as compared to a battery system with mechanical venting valves as no spring-loading must be overcome, and battery pack tightness, i.e. a desired compression of the battery cells in a battery pack, may be reliably upheld (and not exceeded) during a thermal event. Even if the distribution of the pressure inside the battery housing resulting from a thermal runaway is no homogenous, all of the electronic venting valves may open at the same time. The battery system thus more securely handles a thermal runaway occurring in one or more of its battery cells.

According to an embodiment, the battery system further includes a sensor for detecting the occurrence of a thermal runaway inside the battery housing. The sensor may be disposed inside the battery housing. The sensor may include one or more sensor elements for detecting the occurrence of a thermal runaway. The sensor elements may be distributed inside the battery housing. The sensor may be a pressure sensor. That is, the sensor or its sensor elements may be adapted to detect a pressure inside the battery housing. The sensor may output a sensor signal to the control unit to which the sensor may be electrically connected. The sensor signal may be output in case a thermal runaway occurs inside the battery housing. The control unit may be adapted to control the electronic venting valves to open simultaneously in response to the sensor signal. For example, if the sensor is a pressure sensor, the sensor signal may be output when a pressure inside the battery housing exceeds a predetermined value. Also, the control unit may determine based on the pressure detected by the sensor whether a predetermined value is exceeded. The control unit may thus control the electronic venting valves to open simultaneously in case the detected pressure exceeds a predetermined value. The predetermined value may be set relatively low, for example lower than a pressure needed for a typical mechanical venting valve to open, to ensure timely opening of the electronic venting valves. The control unit may open the electronic venting valves when at least one of the sensor elements of the sensor detects a pressure exceeding the predetermined value. This way, the occurrence of a thermal runaway may be reliably detected.

According to an embodiment, at least one of the electronic venting valves includes a mechanical backup venting element adapted to open in case a pressure inside the battery housing exceeds a predetermined value. The mechanical backup venting element may be adapted to open if the electronic venting valves fail. For example, the electronic venting valves may open upon a predetermined first pressure inside the battery housing being exceeded, as explained above, while the mechanical backup venting element may open upon a predetermined second pressure inside the battery housing being exceeded, wherein the predetermined second pressure may be higher than the predetermined first pressure. Thus, during regular operation the electronic venting valves will be opened simultaneously by the control unit as explained above to ensure sufficient venting. If, however, this system should fail, for example because the sensor or the control unit fails or if there is a power blackout, the pressure will rise further until the predetermined second pressure is reached. Then, the mechanical backup venting element will open allowing an emergency venting of the battery cells.

According to an embodiment, the mechanical backup venting element is disposed in a valve cap of the electronic venting valve. In an embodiment, the mechanical backup venting element includes or consists of a burst membrane. As mentioned above, the electronic venting valves may include a valve base having a venting opening and a valve cap covering said venting opening in the closed position. Inside the valve cap the mechanical backup venting element may be disposed. The mechanical backup venting element may thus, in a closed position, cover a through-hole in the valve cap. In an open position, the mechanical backup venting element may provide access to the through-hole such that the venting gas stream may pass through the through-hole and thus through the electronic venting valve. For example, if the venting element includes or consists of a burst membrane, the burst membrane may rupture if a predetermined pressure inside the battery housing is exceeded such that the venting gas stream may pass through. Thus, the mechanical backup venting element may be constructively simple and reliably.

The electronic actuation of the electronic venting valves may be achieved by different technical solutions. According to an embodiment, the electronic actuator includes an electro-magnetic element which is adapted to, when powered, hold a valve cap of the venting valve in the closed position. Further, the valve cap of the venting valve may be preloaded into the opening position such that the valve cap moves into the open position when the electro-magnetic element is not powered. In other words, if the electronic actuator is powered (with a current provided for example by the control unit), the electronic venting valve is held in the closed position. If the electronic actuator is not powered (= no current provided for example by the control unit), the electronic venting valve is in the open position. Thus, in case of a power loss, the electronic venting valves will snap into the open position and thus ensure venting in case of a thermal runaway. Such an electronic actuation may be relatively simple and reliable.

In the alternative, according to an embodiment, the electronic actuator may include an electric motor driving a worm gear. The worm gear may be connected to the valve cap. That is, the electronic actuator may include a worm gear and an electric motor, wherein the control unit may, in case of a thermal runaway, control the electric motor to drive the worm gear and thus the valve cap such that the electronic venting valve is moved into the open position. Correspondingly, the control unit may control the electric motor to drive the worm gear and thus the valve cap such that the electronic venting valve is moved into the closed position. Such an electronic actuation may be relatively simple and reliable. In another embodiment, the electronic actuator of at least one of the at least two electronic venting valves may include an electro-magnetic element as explained above while the electronic actuator of another one of the at least two electronic venting valves may include an electric motor driving a worm gear as explained above.

According to an embodiment, the battery system further includes a broken wire detection mechanism for detecting whether a cable or wire connection connecting the control unit and one or more of the electronic venting valves is damaged. The control unit may be connected to the electronic venting valves via a wire connection as mentioned above. The broken wire detection mechanism may detect the integrity of the wire and, for example, a failure of the wire and may output a respective signal. The control unit may receive said signal and act accordingly. This may serve to reach a required Automotive Safety Integrity Level (ASIL).

The invention also pertains to an electric vehicle including a battery system according to the disclosure, for example as a traction battery.

### Specific Embodiments

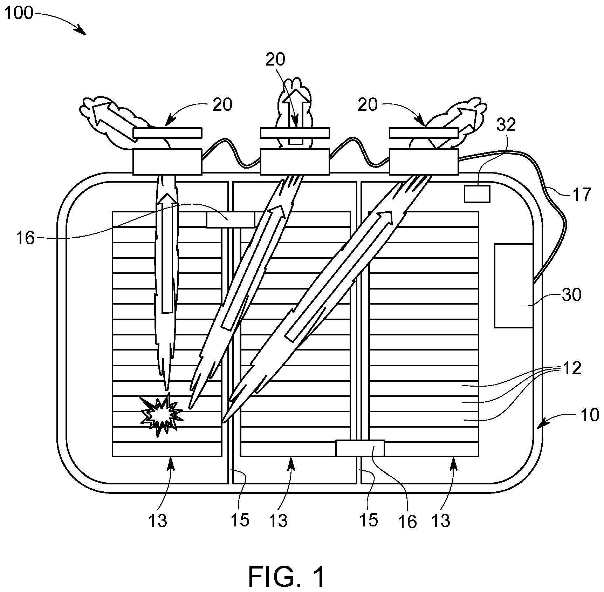

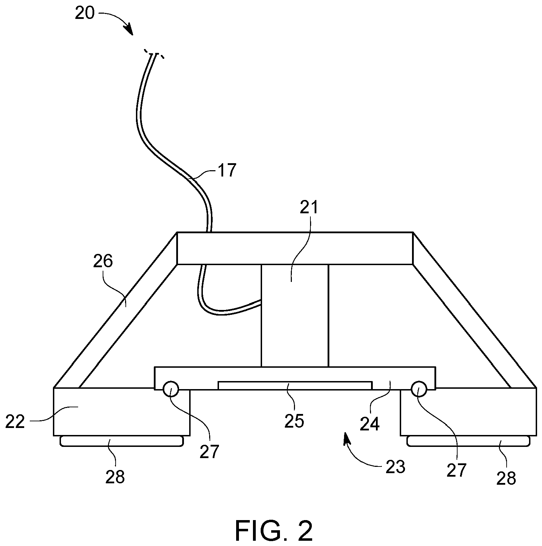

Fig. 1 and 2 show an embodiment of a battery system 100 according to the disclosure. The battery system 100 includes a battery housing 10 and a plurality of battery cells 12 accommodated within the battery housing 10. In Fig. 1, which shows the battery system 100 from above, the battery cells 12 are arranged to form three battery packs 13 that are separated by wall members 15 and are interconnected in series via busbars 16. The battery cells 12 may, however, be arranged in a different manner. At their top side the battery cells 12 include not-shown venting exits through which a venting gas stream may exit in case of a thermal runaway occurring in the respective battery cell 12. In Fig. 1, a thermal runaway event is illustrated to occur in one of the battery cells 12 resulting in a venting gas stream including gas and hot particles to be ejected by the affected battery cell 12.

The battery system 100 further includes at least two electronic venting valves 20, in this case three electronic venting valves 20 as shown in Fig. 1. The electronic venting valves 20 are disposed at a side wall of the battery housing 10 and are electrically connected to a control unit 30, which may be a battery management system, via an electrical wire 17. A sensor 32, which may for example be a pressure sensor, is disposed inside the battery housing 10 and is adapted to detect the occurrence of a thermal runaway inside the battery housing 10. The sensor 32 may, for example, measure a pressure inside the battery housing continuously or periodically and the control unit 30 may determine whether the measured pressure exceeds a first predetermined value. If the measured pressure exceeds the first predetermined value, the control unit 30 sends a signal to the electronic venting valves 20 to open the electronic venting valves 20. The venting gas stream may thus leave the battery housing 10 via the electronic venting valves 20.

The electronic venting valves 20 are adapted to be electronically actuated via the control unit 30 and thus moved into an open position in response to the sensor 32 detecting a thermal runaway event, wherein the electronic venting valves 20 in the open position allow for a venting gas stream exhausted by one or more of the battery cells 12 to pass through the electronic venting valves 20 and leave the battery housing 10 as illustrated in Fig. 1.

An exemplary embodiment of one of the electronic venting valves 20 is shown in Fig. 2. The electronic venting valve 20 shown in Fig. 2 includes a valve base 22 having a venting opening 23, a valve cap 24 covering the venting opening 23 in the closed position (as shown in Fig. 2), and a valve cover 26. At the valve cover 26, an electronic actuator 21 is disposed which is connected to the valve cap 24 and is adapted to move the same. In the closed position, the valve cap 24 covers the venting opening 23 and thereby seals the inside of the battery housing 10 from the outside. To provide for a sufficient sealing, a first sealing element 27, for example a sealing ring, is provided at the side of the valve cap 24 contacting the valve base 22, and a second sealing element 28 is provided at the side of the valve base 22 contacting an outer surface of the battery housing 10. The electronic venting valve 20 further includes a mechanical backup venting element 25, which may for example be a burst membrane, disposed at the side of the valve cap 24 facing and covering the venting opening 23.

According to the disclosure, the control unit 30 of the battery system 100 is adapted to control the electronic venting valves 20 to open simultaneously in case of a thermal runaway. That is, if the sensor 32 detects a thermal runaway occurring inside the battery housing 10, for example based on a detected overpressure, the control unit 30 reacts by sending a control signal to the electronic venting valves 20 via the electrical wire 17 to open all the electronic venting valves 20 at the same time. The simultaneous opening of all the electronic venting valves 20 allows for the full cross-section of the venting openings 23 of all the electronic venting valves 20 to be available quickly and thus in an early state of a thermal runaway event. Thus, a maximum possible volume flow of venting gas through the electronic venting valves 20 is ensured. As a consequence, the temperatures inside the battery housing may be kept at a low level and the venting gas stream may be discharged quickly and reliably. Also, the maximum pressure inside the battery housing may be much lower as compared to a battery system with mechanical venting valves as no spring-loading must be overcome, and battery pack tightness may be reliably upheld during a thermal event. The battery system thus more securely handles a thermal runaway occurring in one or more of its battery cells.

The electronic actuator 21 may include a not shown electro-magnetic element which, when powered, holds the valve cap 24 of the venting valve 20 in the closed position. The valve cap 24 may be preloaded into the opening position such that the valve cap 24 moves into the open position when the electro-magnetic element is unpowered. Alternatively, the electronic actuator 21 includes a not shown electric motor driving a worm gear. Other embodiments may of course be thinkable to provide electric actuation of the electronic venting valves 20.

Should the electronic venting valves 20 fail, for example because of a power outage, the battery system 100 may nevertheless ensure that the battery housing 10 is vented in case of a thermal runaway via the mechanical backup venting element 25. That is, the mechanical backup venting element 25 may be adapted to rupture when the pressure inside the battery housing 10 reaches or exceeds a second predetermined pressure, which may be larger than the first predetermined pressure. The mechanical backup venting element 25 may thus expose a through-hole extending through the valve cap 24 and thereby provide a way for the venting gas stream to pass through the electronic venting valve 20 to the outside. Thus, even if the valve cap 24 stays closed due to some kind of malfunction, the battery housing 10 may be vented.

The battery system 100 may further include a not shown broken wire detection mechanism for detecting whether the electrical wire 17 connecting the control unit 30 and the electronic venting valves 20 is damaged. The broken wire detection mechanism may detect the integrity of the wire and, for example, a failure of the wire and may output a respective signal. The control unit 30 may receive said signal and act accordingly. This may serve to reach a required Automotive Safety Integrity Level (ASIL).

### Reference signs

- 10: battery housing
- 12: battery cells
- 13: battery pack
- 15: wall members
- 16: busbars
- 17: electrical wire
- 20: electronic venting valves
- 22: valve base
- 23: venting opening
- 24: valve cap
- 25: mechanical backup venting element
- 26: valve cover
- 27: first sealing element
- 28: second sealing element
- 30: control unit
- 32: sensor

## Claims

1. A battery system (100), comprising:
a battery housing (10);
a plurality of battery cells (12) accommodated within the battery housing (10);
at least two electronic venting valves (20) arranged at the battery housing (10), the electronic venting valves (20) being adapted to be adjusted between an open position and a closed position via an electronic actuator (21), and
a control unit (30) adapted to control the electronic venting valves (20) to open simultaneously in case of a thermal runaway.

2. The battery system according to claim 1, further comprising a sensor (32) adapted to detect the occurrence of a thermal runaway inside the battery housing (10) and to output a sensor signal in case a thermal runaway occurs, wherein the control unit (30) is adapted to control the electronic venting valves (20) to open simultaneously in response to the sensor signal.

3. The battery system according to claim 2, wherein the sensor (32) is a pressure sensor adapted to detect a pressure inside the battery housing (10), wherein the control unit (30) is adapted to control the electronic venting valves (20) to open simultaneously in case the detected pressure exceeds a predetermined value.

4. The battery system according to any one of the preceding claims, wherein at least one of the electronic venting valves (20) comprises a mechanical backup venting element (25) adapted to open in case a pressure inside the battery housing (10) exceeds a predetermined value.

5. The battery system according to claim 4, wherein the mechanical backup venting element (25) is disposed in a valve cap (24) of the electronic venting valve (20).

6. The battery system according to claim 4 or 5, wherein the mechanical backup venting element (25) comprises a burst membrane.

7. The battery system according to any one of the preceding claims, wherein the electronic actuator (21) comprises an electro-magnetic element which, when powered, holds a valve cap (24) of the venting valve (20) in the closed position, wherein the valve cap (24) of the venting valve (20) is preloaded into the opening position such that the valve cap (24) moves into the open position when the electro-magnetic element is unpowered.

8. The battery system according to any one of the preceding claims, wherein the electronic actuator (21) comprises an electric motor driving a worm gear.

9. The battery system according to any one of the preceding claims, further comprising a broken wire detection mechanism for detecting whether a cable connection connecting the control unit and one or more of the electronic venting valves (20) is damaged.

10. An electric vehicle comprising the battery system according to any one of the preceding claims.

## Amended claims

### Amended claims in accordance with Rule 137(2) EPC.

1. A battery system (100), comprising:
a battery housing (10);
a plurality of battery cells (12) accommodated within the battery housing (10);
at least two electronic venting valves (20) arranged at the battery housing (10), the electronic venting valves (20) being adapted to be adjusted between an open position and a closed position via an electronic actuator (21), and
a control unit (30) adapted to control the electronic venting valves (20) to open simultaneously in case of a thermal runaway so as to vent a venting gas stream of the thermal runaway to the outside of the battery housing (10).

2. The battery system according to claim 1, further comprising a sensor (32) adapted to detect the occurrence of a thermal runaway inside the battery housing (10) and to output a sensor signal in case a thermal runaway occurs, wherein the control unit (30) is adapted to control the electronic venting valves (20) to open simultaneously in response to the sensor signal.

3. The battery system according to claim 2, wherein the sensor (32) is a pressure sensor adapted to detect a pressure inside the battery housing (10), wherein the control unit (30) is adapted to control the electronic venting valves (20) to open simultaneously in case the detected pressure exceeds a predetermined value.

4. The battery system according to any one of the preceding claims, wherein at least one of the electronic venting valves (20) comprises a mechanical backup venting element (25) adapted to open in case a pressure inside the battery housing (10) exceeds a predetermined value.

5. The battery system according to claim 4, wherein the mechanical backup venting element (25) is disposed in a valve cap (24) of the electronic venting valve (20).

6. The battery system according to claim 4 or 5, wherein the mechanical backup venting element (25) comprises a burst membrane.

7. The battery system according to any one of the preceding claims, wherein the electronic actuator (21) comprises an electro-magnetic element which, when powered, holds a valve cap (24) of the venting valve (20) in the closed position, wherein the valve cap (24) of the venting valve (20) is preloaded into the opening position such that the valve cap (24) moves into the open position when the electro-magnetic element is unpowered.

8. The battery system according to any one of the preceding claims, wherein the electronic actuator (21) comprises an electric motor driving a worm gear.

9. The battery system according to any one of the preceding claims, further comprising a broken wire detection mechanism for detecting whether a cable connection connecting the control unit and one or more of the electronic venting valves (20) is damaged.

10. An electric vehicle comprising the battery system according to any one of the preceding claims.
